# EUROPEAN PATENT APPLICATION

(11) **EP 3 223 072 A1**
(43) Date of publication of application: **27.09.2017**
(21) Application number: 15861228.3
(22) Date of filing: 02.03.2015
(51) Int. Cl.: G03B 29/00, H04N 5/70, G06F 3/0488, G06F 1/16, H04M 1/02, G06F 3/0481

(54) **PROJECTOR PLAYING CONTROL METHOD, DEVICE, AND COMPUTER STORAGE MEDIUM**

(30) Priority: 20.11.2014 CN 201410668288
(71) Applicant: ZTE Corporation, Shenzhen, Guangdong 518057 (CN)
(72) Inventor: ZHAO, Dongxiao, Shenzhen, Guangdong 518057 (CN)
(74) Representative: Lavoix
(86) International application number: PCT/CN2015/073519
(87) International publication number: WO 2016/078251

(57) **Abstract**

Provided are a projector playing control method, device, and computer storage medium, for addressing the problem in the prior art of inconvenient user operation caused by a display screen of the projector being used as an operation screen while a file is displayed on the operation screen. The projector control method comprises: when the projector receives a playing instruction, setting an icon corresponding to an application used to play the file as the content to be displayed on the operation screen of the projector, and displaying the icon, the icon being used to generate a control instruction according to the user operation, thus controlling the playing of the content outputted by a light source of the projector.

## Description

### TECHNICAL FIELD

The disclosure relates to the field of mobile communications, and in particular, to a method and device for controlling playing of a projector, and computer storage medium.

### BACKGROUND

As the technology of projector is improved continuously, the integration level of the projector is higher and higher. At present, a projector unit can already be integrated to a very small Integrated Circuit (IC) chip. And a projection function can already be implemented on a terminal, e.g. a cell phone. That is, it is possible to use a terminal to implement the traditional function realized by a PC in combination with a common projector. When the terminal is used to project a corresponding file, because some terminals are comparatively small, and their screens are comparatively small, such kind of terminals are usually used to project images onto a target screen. It is not necessary to display playing content on the screens of such kind of terminals. Meanwhile, if the display screen of the terminal is used as an operation screen while a file is displayed on the display screen, then it is not convenient for the user to perform operations, thus influencing the user experience.

### SUMMARY

In view of this, the disclosure is intended to provide a method and device for controlling playing of a projector, and computer storage medium, which can solve the problem in the prior that it is not convenient for a user to perform operation when a display screen of the projector is used as an operation screen while a file is displayed on the operation screen.

According to an aspect of an embodiment of the disclosure, a method for controlling playing of a projector is provided. The method includes that, when a playing instruction is received by the projector, an icon, which is corresponding to an application used for playing the file, is taken as the content to be displayed on the operation screen of the projector, and the icon is displayed. The icon is used for generating a control instruction according to a user operation, for controlling playing of content output by a light source of the projector.

In the above solution, the step that the icon, which is corresponding to the application used for playing the file, is taken as the content to be displayed on the operation screen of the projector and the icon is displayed includes a step that, when the file to be played is a file for editing one or more documents, a keyboard is displayed on the operation screen of the projector.

In the above solution, the step that the icon, which is corresponding to the application used for playing the file, is taken as the content to be displayed on the operation screen of the projector and the icon is displayed includes that, when the file to be played is a file for presenting one or more documents or a file for playing media or medium, a playing control key is displayed on the operation screen of the projector.

In the above solution, the method further includes that a switch icon is displayed while the icon is displayed on the operation screen of the projector. The switch icon is used for switching, in response to a user operation, the content displayed on the operation screen. When the application used for playing the file cannot be determined or a switch instruction is received, a pointer icon or a keyboard is displayed on the operation screen of the projector according to the user operation.

In the above solution, the method further includes that a corresponding relationship between the icon and the type of the application used for playing the file is pre-stored; before the icon, which is corresponding to the application used for playing the file, is displayed on the operation screen of the projector, the icon is obtained according to the corresponding relationship.

According to another aspect of an embodiment of the disclosure, a device for controlling playing of a projector is provided. The device includes: a display control module, which is configured to, when the projector receives the playing instruction, take the icon, which is corresponding to the application used for playing the file, as the content to be displayed on the operation screen of the projector and display the icon. The icon is used for generating the control instruction according to the user operation, for controlling the playing of content output by the light source of the projector.

The display control module is configured to, when the file to be played is the file for editing one or more documents, display a keyboard on the operation screen of the projector.

The display control module is configured to, when the file to be played is the file for presenting one or more documents or the file for playing media or medium, display the playing control key on the operation screen of the projector.

In the above solution, the device may further include a first display module and second display module. The first display module may be configured to display the switch icon while displaying the icon on the operation screen of the projector. The switch icon is used for switching, in response to a user operation, the content displayed on the operation screen. The second display module may be configured to, when the application used for playing the file cannot be determined or the switch instruction is received, display a pointer icon or a keyboard on the operation screen of the projector according to the user operation.

In the above solution, the device may further include a storing unit and obtaining unit. The storing unit may be configured to pre-store the corresponding relationship between the icon and the type of the application used for playing the file. The obtaining unit may be configured to, before displaying the icon, which is corresponding to the application used for playing the file, on the operation screen of the projector, obtain the icon according to the corresponding relationship.

An embodiment of the disclosure also provides a computer storage medium containing a set of executable instructions for performing the method for controlling playing of a projector.

According to the embodiment of the disclosure, after the playing instruction is received by the projector, the icon, which is corresponding to the application used for playing the file, is taken as the content to be displayed on the operation screen of the projector, such that it is convenient for the user to control the content output by the light source of the projector.

### BRIEF DESCRIPTION OF THE DRAWINGS

Fig. 1 is a flowchart of a method for controlling playing of a projector according to an embodiment of the disclosure; and
Fig. 2 is a block diagram showing a structure of a device for controlling playing of a projector according to an embodiment of the disclosure.

### DETAILED DESCRIPTION

In order to solve the problem in the prior art that when a projector function of a terminal is adopted, it is not convenient for the user to control the playing of a file, the embodiment of the disclosure provides a method and device for controlling playing of a projector, and computer storage medium. The embodiment of the disclosure will be described in detail below in conjunction with the accompanying drawings and embodiments. It is to be understood that the specific embodiments are described here for purpose of illustrating the disclosure only, without limiting the disclosure.

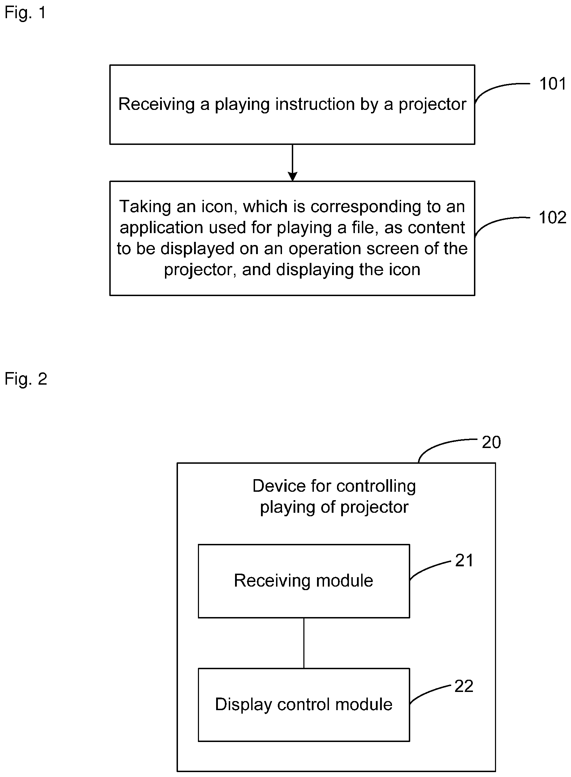

Fig. 1 is a flowchart of a method for controlling playing of a projector according to an embodiment of the disclosure. As shown in Fig. 1, the method includes the following steps.

In a step 101, the projector receives a playing instruction.

In a step 102, an icon corresponding to an application used for playing the file is taken as the content to be displayed on the operation screen of the projector, and the icon is displayed.

In the step 102, the icon is used for generating a control instruction according to a user operation, for controlling playing of content output by a light source of the projector. The icon may be a shortcut button, a mouse pointer or a keyboard. When the icon, which is corresponding to the application used for playing the file, is taken as the content to be displayed on the operation screen of the projector, the current operation screen of the projector only displays the icon for controlling the playing, and does not display the display content that is projected onto a target screen through the light source of the projector. Because the content that is projected onto the target screen by the projector through the light source and the content displayed on the operation screen of the projector may be two pieces of different data, it is possible to run a program on the projector to separately control the content displayed on the operation screen of the terminal. This method may be realized by the existing means in the prior art, which will not be described here. In such a manner, when the user uses a projection function through the terminal with a small screen, the display screen of the terminal may only implement a function of inputting a playing control signal. That is, the display screen of the terminal only plays a role of inputting the control signal. As such, the solution is convenient for the user to input the control signal, facilitating the user operation.

The step that the icon, which is corresponding to the application used for playing the file, is taken as the content to be displayed on the operation screen of the projector and the icon is displayed on the operation screen of the projector includes that, when the file to be played is a file for editing one or more documents, a keyboard is displayed on the screen of the projector. For facilitating a user operation, the entire screen of the terminal may be used for displaying a qwerty keyboard.

When the file to be played is a media file, a playing control key, such as a function button in audio/video playing software, is displayed on the screen of the projector.

Based on the steps 101 and 102, the method may further include that a switch icon is displayed while the icon is displayed on the operation screen of the projector. The switch icon is used for switching, in response to a user operation, the content displayed on the operation screen. When the type of the application used for playing the file cannot be determined or a switch instruction is received, a pointer icon or a keyboard is displayed on the operation screen of the projector according to the user operation.

In order to improve the influencing efficiency of the control signal, the method further includes that a corresponding relationship between the icon and the type of the application used for playing the file is pre-stored. Before the icon, which is corresponding to the application used for playing the file, is displayed on the screen of the projector, the icon corresponding to the type of the application used for playing the file is searched for according to the corresponding relationship.

The method for controlling playing of a projector provided by the embodiment of the disclosure is described in detail below by taking a portable intelligent projector as an example.

The portable intelligent projector of the present embodiment may be a terminal with a projector function. After the terminal is powered on, the default state of the projector function is a disabled state. A Liquid Crystal Display (LCD) is used for displaying. The functions of a touch screen are general functions like clicking and dragging.

When the projector function of the terminal is enabled, the LCD enters a control display mode. At the point, the system will automatically start a touch identification program or procedure. The program will determine the state of software running currently, and transfer touch information and touch intention of the user to the system.

Before the type of the application running on the terminal and used for playing the file is determined, the types of common software are stored in a database of the terminal. The type of the software running on the terminal currently is queried from the database. In the present embodiment, the software may be classified as: a. document editing type; b. media playing type; c. document presenting type; and d. other type. If the corresponding type of the software cannot be queried in the database of the terminal, the terminal will send a querying instruction to a server through a network. The server then feeds back the type of the software running currently. If the type of the software has not been stored in either of the database of the terminal and a remote server, the software is classified as the other type.

If the type of the software running on the terminal currently is the document editing type, the LCD displays a full qwerty keyboard. When the corresponding position of the LCD is touched through the touch screen, the touch identification program will send to the system at least one corresponding English character, symbol or other information similar to keyboard input, In this way, actions like character input and cursor control are realized. When the software running is the document editing type, the LCD displays a switch icon. When the switch icon is touched through the touch screen, the touch identification program will clear the qwerty keyboard displayed on the LCD currently, at the same time, prompt words and a touch boarder prompt are displayed, and the pointer icon appears on the display interface of the terminal. In such a case, a single finger may touch the pointer icon to move the pointer icon, so that the operation of moving the pointer is realized. Two fingers slide to implement the function of browsing a page while sliding the page. A single click implements a selecting function, and double-click implements a function of opening a related application. When the switch icon is re-touched, the LCD re-displays the qwerty keyboard, and the related function is restored.

When the type of the software running on the terminal currently is the media playing type, the LCD displays shortcut icons like play, forward, back, previous track and next track. When the corresponding position of the LCD is touched through the touch screen, the touch identification program will send a corresponding operation instruction to the system, so as to realize the functions of play, forward, back, previous track and next track of media. When the type of the software running is the media playing type, the LCD displays a switch icon. When the switch icon is touched through the touch screen, the touch identification program will get rid of media operating shortcuts displayed by the LCD currently. At the same time, the prompt words and the touch boarder prompt are displayed, and the pointer icon appears on the display interface of the terminal. In such a case, a single finger may touch the pointer icon to move the pointer icon, so that the operation of moving the pointer is realized. Two fingers slide to implement the function of browsing a page while sliding the page. A single click implements a selecting function, and double-click implements the function of opening a related application. When the switch icon is re-touched, the LCD re-displays the shortcut icons like play, forward, back, previous track and next track, and the related function is restored.

When the type of the software running on the terminal currently is the document presenting type, the LCD displays shortcut icons like previous page, next page and return. When the corresponding position of the LCD is touched through the touch screen, the touch identification program will send a corresponding operation instruction to the system, so as to realize the functions of previous page, next page and return in the document presentation. When the type of the software running is the document presenting type, the LCD displays a switch icon. When the corresponding position of the LCD is touched through the touch screen, the touch identification program will get rid of presenting shortcuts displayed by the LCD currently. At the same time, the prompt words and the touch boarder prompt are displayed, and the pointer icon appears on the display interface of the terminal. In such a case, a single finger may touch the pointer icon to move the pointer icon, so that the operation of moving the pointer is realized. Two fingers slide to implement the function of browsing a page while sliding the page. A single click implements a selecting function, and double-click implements the function of opening a related application. When the switch icon is re-touched, the LCD re-displays the shortcut icons like previous page, next page and return again, and the related function is restored.

When the type of the software running on the terminal currently is the other type, the LCD displays the prompt words and the touch boarder prompt, and the pointer icon appears on the display interface of the terminal. In such a case, a single finger touches and slides to implement the operation of moving the pointer. Two fingers slide to implement the function of browsing a page while sliding the page. A single click implements a selecting function, and double-click implements the function of opening a related application. When the type of the software running on the terminal is the other type, the LCD displays an icon for switching to a qwerty keyboard. When the corresponding position of the LCD is touched through the touch screen, the touch identification program will display the entire display screen of the terminal as the full qwerty keyboard. When the corresponding position of the LCD is touched through the touch screen, the touch identification program will send to the system at least one corresponding English character, symbol or other information similar to keyboard input, so that actions like character input and cursor control are realized. When the switch icon is re-touched, the LCD will return to a mouse touch state.

Fig. 2 is a block diagram showing a structure of a device for controlling playing of a projector according to an embodiment of the disclosure. As shown in Fig. 2, the device 20 includes a receiving module 21 and a display control module 22.

The receiving module 21 is configured to receive the playing instruction.

The display control module 22 is configured to take the icon, which is corresponding to the application used for playing the file, as the content to be displayed on the operation screen of the projector and display the icon. The icon is used for generating the control instruction according to the user operation, for controlling the playing of content output by the light source of the projector.

The display control module 22 is configured to, when the file to be played is the file for editing one or more documents, display a keyboard on the operation screen of the projector. When the file to be played is a file for presenting one or more documents or a file for playing media or medium, display a playing control key on the operation screen of the projector.

The device 20 may further include a first display module and second display module.

The first display module may be configured to display a switch icon while displaying the icon on the operation screen of the projector. The switch icon is used for switching, in response to a user operation, the content displayed on the operation screen. The second display module may be configured to, when the type of the application used for playing the file cannot be determined or the switch instruction is received, display the pointer icon or the keyboard on the operation screen of the projector according to the user operation.

The device 20 may further include a storing unit and obtaining unit.

The storing unit may be configured to pre-store the corresponding relationship between the icon and the type of the application used for playing the file.

The obtaining unit may be configured to, before displaying the icon, which is corresponding to the application used for playing the file, on the operation screen of the projector, search for the icon according to the corresponding relationship.

The receiving module 21 may be realized by the communication chip of the device for controlling playing of the projector. The display control module 22, the first display module, the second display module, and the obtaining unit may be realized by a Central Processing Unit (CPU), a Micro Processor Unit (MPU), a Digital Signal Processor (DSP), or a Field Programmable Gate Array (FPGA) of the device for controlling playing of the projector. The storage unit may be realized by the memory of the device for controlling playing of the projector.

An embodiment of the disclosure also provides a computer storage medium, which containing a set of computer executable instructions for performing the method for controlling playing of a projector according to the embodiment of the disclosure.

According to the embodiment of disclosure, after the playing instruction is received by the projector, the icon, which is corresponding to the application used for playing the file, is taken as the content to be displayed on the operation screen of the projector. As such, it is convenient for the user to control the content output by the light source of the projector.

Although the preferred embodiments of the disclosure have been disclosed for purpose of illustration, those skilled in the art will understand that various improvements, addition and replacements are possible, so the scope of the disclosure should not be limited to the above embodiments.

## Claims

1. A method for controlling playing of a projector, comprising:
when a playing instruction is received by the projector, taking an icon, which is corresponding to an application used for playing a file, as content to be displayed on an operation screen of the projector and displaying the icon; wherein the icon is used for generating a control instruction according to a user operation, for controlling playing of content output by a light source of the projector.

2. The method according to claim 1, wherein taking the icon, which is corresponding to the application used for playing the file, as the content to be displayed on the operation screen of the projector and outputting the icon comprises:
when the file to be played is a file for editing one or more documents, displaying a keyboard on the operation screen of the projector.

3. The method according to claim 1, wherein taking the icon, which is corresponding to the application used for playing the file, as the content to be displayed on the operation screen of the projector and outputting the icon comprises:
when the file to be played is a file for presenting one or more documents or a file for playing media or medium, displaying a playing control key on the operation screen of the projector.

4. The method according to claim 1, further comprising:
displaying a switch icon while displaying the icon on the operation screen of the projector; wherein the switch icon is used for switching, in response to a user operation, the content displayed on the operation screen; when the application used for playing the file cannot be determined or a switch instruction is received, displaying, according to the user operation, a pointer icon or a keyboard on the operation screen of the projector.

5. The method according to any one of claims 1 to 4, further comprising:
pre-storing a corresponding relationship between the icon and the type of the application used for playing the file; and
before displaying the icon, which is corresponding to the application used for playing the file, on the operation screen of the projector, obtaining the icon according to the corresponding relationship.

6. A device for controlling playing of a projector, comprising:
a display control module, which is configured to, when a playing instruction is received by the projector, take an icon, which is corresponding to an application used for playing a file, as content to be displayed on an operation screen of the projector and display the icon; the icon is used for generating a control instruction according to a user operation, for controlling playing of content output by a light source of the projector.

7. The device according to claim 6, wherein the display control module is configured to, when the file to be played is a file for editing one or more documents, display a keyboard on the operation screen of the projector.

8. The device according to claim 6, wherein the display control module is configured to, when the file to be played is a file for presenting one or more documents or a file for playing media or medium, display a playing control key on the operation screen of the projector.

9. The device according to claim 6, further comprising:
a first display module, which is configured to display a switch icon while displaying the icon on the operation screen of the projector; wherein the switch icon is used for switching, in response to a user operation, the content displayed on the operation screen;
a second display module, which is configured to, when the application used for playing the file cannot be determined or a switch instruction is received, display a pointer icon or a keyboard on the operation screen of the projector according to the user operation.

10. The device according to any one of claims 6 to 10, further comprising:
a storing unit, which is configured to pre-store a corresponding relationship between the icon and the type of the application used for playing the file; and
an obtaining unit, which is configured to, before displaying the icon, which is corresponding to the application used for playing the file, on the operation screen of the projector, obtain the icon according to the corresponding relationship.

11. A computer storage medium containing a set of computer executable instructions for performing a method for controlling playing of a projector according to any one of claims 1 to 5.
